**Europäisches Patentamt**

(19) **European Patent Office**

**Office européen des brevets**

(11) Publication number : **0 342 304 B1**

(12) **EUROPEAN PATENT SPECIFICATION**

(45) Date of publication of patent specification :
19.08.92 Bulletin 92/34

(51) Int. Cl.⁵ : **B62D 27/06**

(21) Application number : **88830497.9**

(22) Date of filing : **22.11.88**

(54) **A device for the sealing of the enclosure elements of a commercial vehicle body.**

(30) Priority : **16.05.88 IT 5315588 U**

(43) Date of publication of application :
**23.11.89 Bulletin 89/47**

(45) Publication of the grant of the patent :
**19.08.92 Bulletin 92/34**

(84) Designated Contracting States :
**AT BE DE FR GB IT LU NL SE**

(56) References cited :
EP-A- 0 051 575
EP-A- 0 144 295
EP-A- 0 265 393
SE-A- 453 067

(73) Proprietor : **VIBERTI VEICOLI INDUSTRIALI S.r.l.**
**Viale G. Matteotti 99**
**I-10042 Nichelino (Torino) (IT)**

(72) Inventor : **Nobili, Roberto**
**Via Giorgio Vecco, 6**
**I-10098 Rivoli (Torino) (IT)**

(74) Representative : **Saconney, Piero et al**
**c/o JACOBACCI-CASETTA & PERANI S.p.A.**
**Via Alfieri, 17**
**I-10121 Torino (IT)**

EP 0 342 304 B1

## Description

The present invention relates to a device for sealing the enclosure elements of a commercial body, according to the preamble of Claim 1.

By enclosure elements is meant the folding pillars and drop boards which delimit the loading platform of the body, as well as any upper removable uprights which extend the pillars upwardly to support the ribs of a tarpaulin.

A device according to the preamble of Claim 1 is known from the document EP-A-0 051 575.

In this known device, the locking assembly is constituted by a member substantially in the form of a right-angled lever one arm of which is constituted by the eyelet and the other arm of which is constituted by a catch adapted to interfere with a lateral abutment of the bolt or of each of two bolts.

The right-angled lever can occupy two stable positions. In one of these, the eyelet projects outwardly of the pillar to house the sealing cable and the catch is in the path of the abutment or abutments. In the other position, the eyelet is retracted into the pillar through a slit in its outer wall and the catch is out of the path of the abutment or abutments. A pin spring biasses the right-angled lever into each of its stable positions, a dead-point being passed through between one position and the other.

The known device has some disadvantages which it would be desirable to eliminate.

A first disadvantage is the fact that, since it is mounted in correspondence with a slit in the pillar, it is subject to the collection of dust and dirt which may obstruct it; another disadvantage is the fact that the pin spring is a component which is subject to breakage; a third disadvantage, in the case of a side pillar provided with two bolts, is that with only one locking assembly it is not possible to release only one of the bolts whilst keeping the other locked for the purposes of preventing false movements.

The object of the invention is to produce a device in which these disadvantages are eliminated.

According to the invention this object is achieved by means of a device which has the characteristics defined in the claims.

In a device according to the invention, the locking assembly is enclosed within the pillar and is protected from dust except for the eyelet which is on the outside of the pillar. Moreover, there is no weak component such as a spring for biasing it into a stable position.

In the case of a pillar including two bolts, the device according to the invention lends itself to the alternative release of one or other of the boards to ensure the locking of the adjacent board against false movements, by virtue of the characteristics defined in Claim 2.

The object of the invention will better be understood from a reading of the detailed description which follows with reference to the appended drawings, purely by way of non-limiting example, in which:

Figure 1 is a partial perspective view of a motor vehicle body, in which can be seen a pillar, two side boards, and an upright associated with the upper part of the pillar, with all these elements in the erect and locked condition,

Figure 2 is a perspective view similar to Figure 1, with one of the boards dropped down and the other locked,

Figure 3 is another perspective view similar to the above, with the two boards dropped down and all the elements released,

Figure 4 is a partially-sectioned side elevational view of the pillar and its upper upright,

Figure 5 is an exploded perspective view of the mechanism which includes the two bolts and the locking assembly according to the invention,

Figure 6 is a partial section taken in the plane indicated VI-VI in Figure 4, on an enlarged scale,

Figure 7 is a similar representation to that of Figure 4, with one of the bolts locked and the other unlocked,

Figure 8 is a cross-section taken in the plane indicated VIII-VIII in Figure 4, with the upper upright locked to the pillar, and

Figure 9 is a section which corresponds to that of Figure 8 with the upper upright released and partially folded down for its removal or fitting.

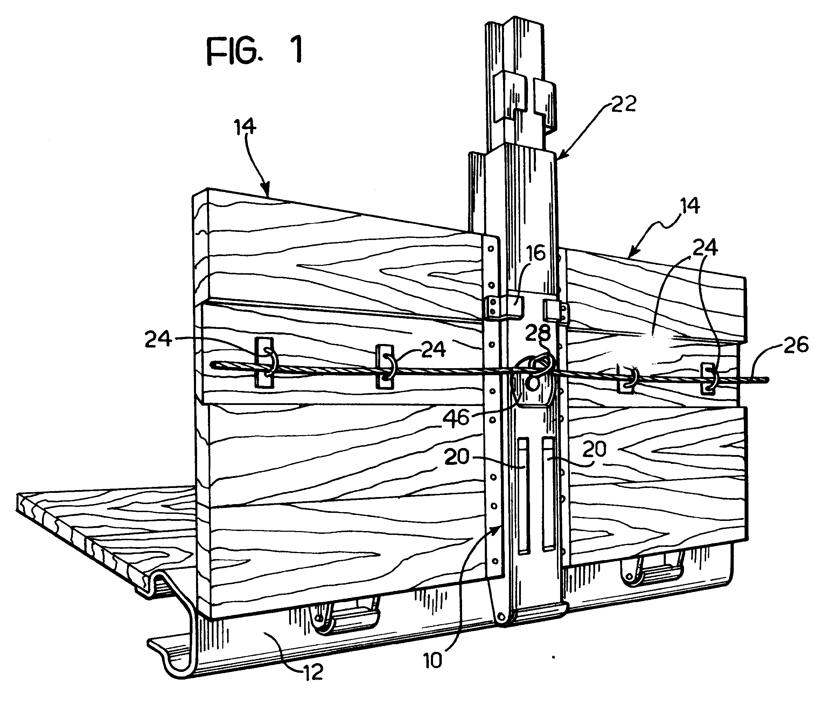

With reference to Figures 1 to 3, a hollow pillar of strong sheet-metal box section is generally indicated 10. The pillar 10 is hinged removably at its base to a side member 12 of the floor of a commercial vehicle, such as a lorry, trailer or semi-trailer.

The lower edges of two adjacent drop boards 14, between which the pillar 10 is interposed, are also hinged removably to the side member 12. The adjacent side edges of the boards 14 have respective lateral square bushes 16 in their upper parts. When the boards 14 and the pillar 10 are erect, the bushes 16 are housed in corresponding lateral notches 18 in the pillar 10 and are held by respective bolts of which more will be said below. These bolts are operable by means of respective levers 20 which are accessible on the outer face of the pillar 10.

For further details of the bolts and their operating mechanisms, reference should be made to the document IT-A-1 108 038.

A removable upper upright 22 is associated with the pillar 10 for the lateral support of a rib (not shown) for the tarpaulin for covering the body.

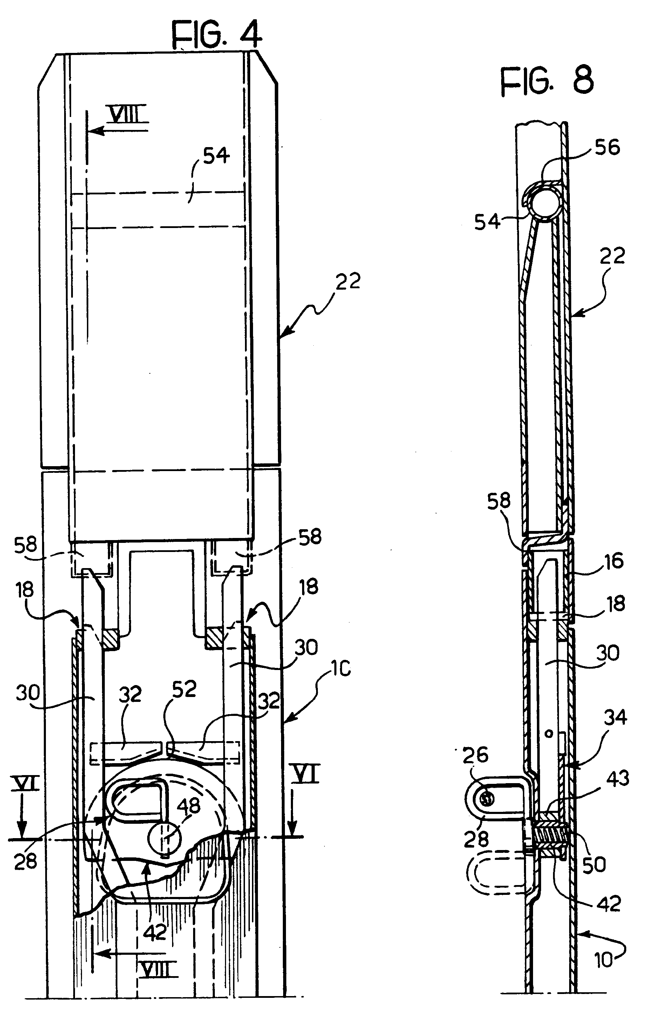

The boards 14 are provided with fixed eyelets 24 for the passage, in known manner, of a sealing cable 26. Each upright, such as 10, is also provided with an eyelet 28 which also holds the sealing cable 26. The eyelet 28 forms part of a rotating locking assembly which will now be described with reference to Figures 4 to 7.

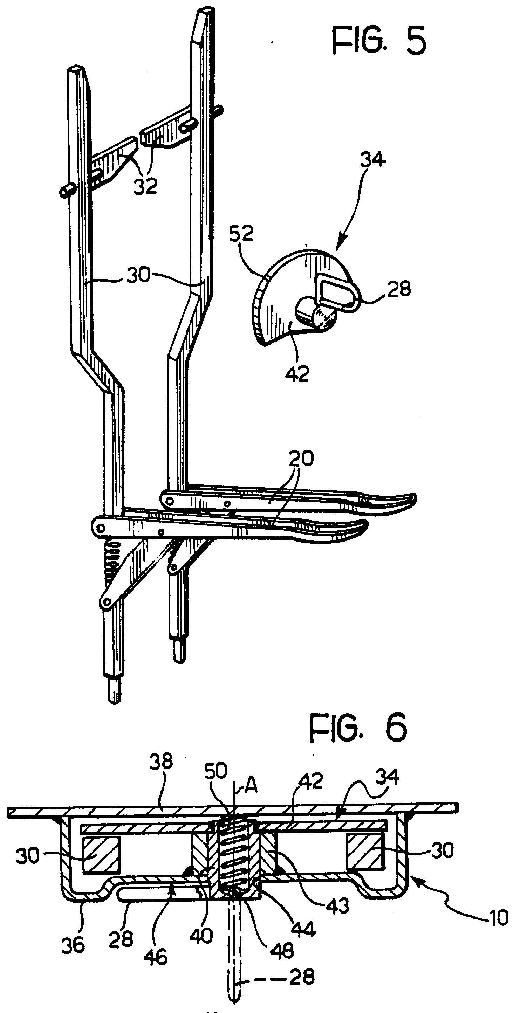

Figures 4 and 5 show the two bolts 30 which are movable longitudinally and parallel to each other within the pillar 10. Each of these bolts 30 is provided in its upper part with an abutment in the form of a strong finger 32 projecting towards the other bolt.

The eyelet of the pillar 10 is again indicated 28. This eyelet 28 forms part of a rotating assembly, indicated 34, which can better be seen in Figure 6.

In Figure 6, the outer wall of the box-sectioned upright 10 is indicated 36 and its inner wall is indicated 38. The rotatable element 34 is substantially enclosed between these two walls 36 and 38.

The assembly 34 includes a central tubular shaft 40 to which is welded a sector-shaped plate 42 which faces the wall 38 and acts as a member for locking the bolts 30.

The tubular shaft 40 is supported rotatably in a bush 43 which is welded to the wall 36 so that the assembly 34 rotates about an axis A normal to the two walls 36 and 38 and situated in a position intermediate the two bolts 30. The end of the shaft 40 opposite the plate 42 projects through a hole 44 formed in the centre of a recess 46 formed in the wall 36.

The eyelet 28 is constituted by a piece of round bar shaped into a "flag" shape. In particular, the eyelet 28 includes a pin 48 which corresponds to the pole of the "flag" and extends transversely through the cavity in the shaft 40. Thus, the eyelet 28 may be rotated between a projecting position for receiving the sealing cable 26 and a position in which it is brought down against the wall 36 in the recess 46 so as not to constitute an undesirable projection when it is not in use. When the eyelet 28 is projecting and the cable 26 does not pass through it, it may be used as a key for rotating the assembly 34.

The cavity of the shaft 40 contains a helical compression spring 50 which acts at one end against the wall 38 and at the other against the pin 48 of the eyelet 28. The sector-shaped plate 42 is kept pressed against the corresponding front face of the bush 43 by virtue of the spring 50, causing friction with respect to the rotation of the assembly 34. The latter cannot therefore rotate accidentally. Moreover, the spring 50 also causes friction with respect to the pin 48. This serves particularly to prevent the eyelet 28 from accidentally leaving its depressed position in the recess 46.

As shown in Figures 4, 5 and 7, the plate 42 is in the form of a sector with a circumferential edge 52 which extends substantially through 180°.

The arrangement is such that, when the sector plate 42 is oriented in a central position, as in Figure 4, in which its circumferential edge 52 faces the top of the pillar 10, this edge interferes with the abutments 32 of both the bolts 30 to prevent them from leaving the raised position in which their upper ends restrain the lateral bushes 16 of the boards 14. This condition corresponds to Figure 1 in which, as can be seen, the eyelet 28 is aligned horizontally with the eyelets 24 for receiving the cable 26.

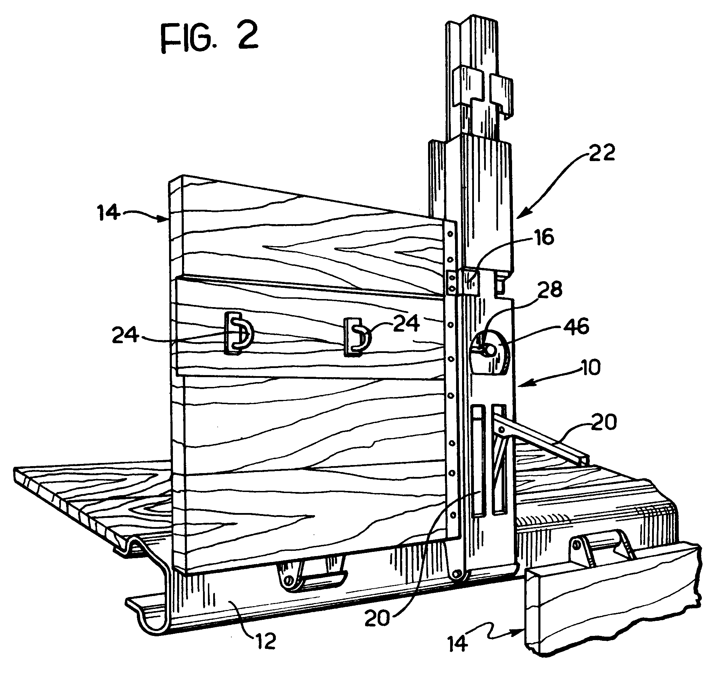

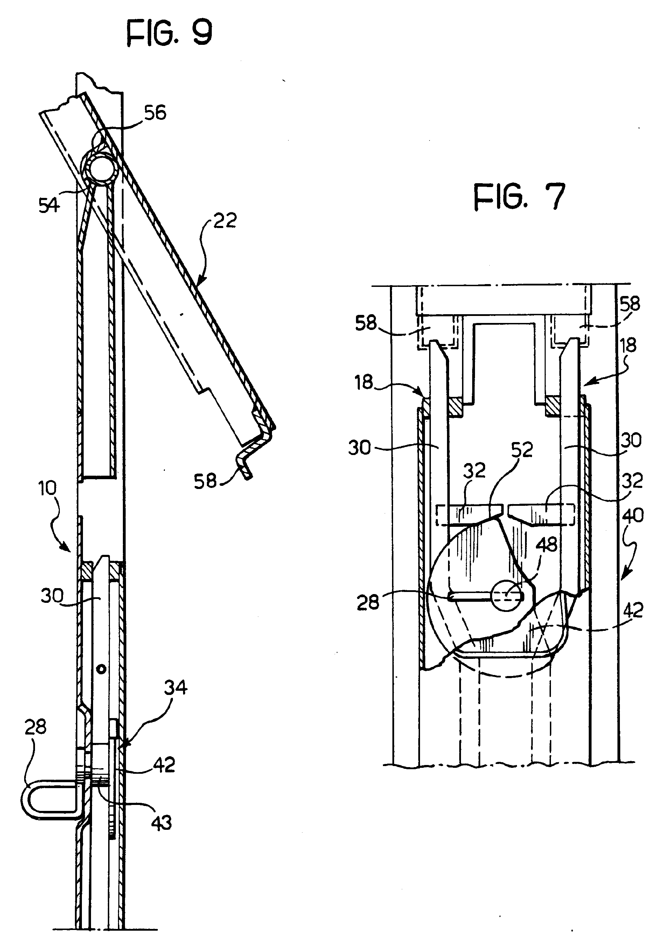

When the sector-shaped plate 42 is rotated through 90° in one sense or the other, one of the bolts 30 remains locked whilst the other can be lowered to release the corresponding board. In Figure 7, the plate 42 has been shown in the condition in which the left-hand bolt 30 is locked and the right-hand bolt 30 is free. This condition corresponds to Figure 2. As can be seen, this rotation is only possible if the cable 26 does not pass through the eyelet 28.

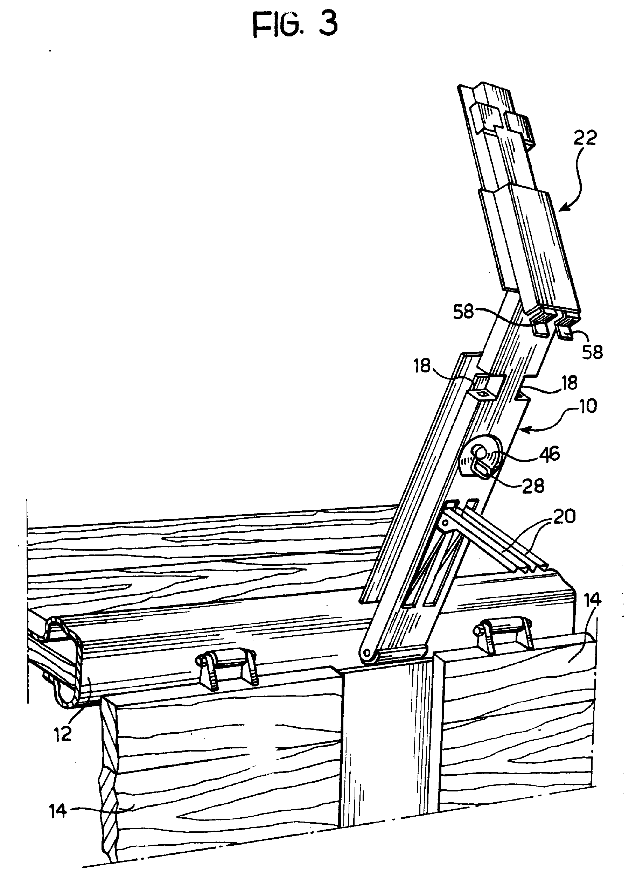

When the sector-shaped plate 42 is oriented at 180° from the position of Figure 4, its circumferential edge 52 no longer interferes with the travel of the two abutments 32 and both the bolts 30 can be lowered to release both the boards 14 and the pillar 10. This situation corresponds to Figure 3. This rotation is also prevented by the presence of the cable 26 in the eyelet 28.

The rotating element 42 ensures not only the secure locking of the pillar 10 and the boards 14 but also that of the upright 22 in its position of alignment with the pillar 10. This capability is illustrated in Figures 8 and 9.

As can be seen in Figures 8 and 9, the pillar 10 is provided at its upper end with a fixed tubular pin 54. In known manner, the upright 22, which is channel sectioned, has an internal curved plate 56 hooked onto the pin 54.

According to the invention, the lower end of the upright 22 is provided with a pair of tabs 58 which are both visible in Figure 3. Each of these tabs 58 is formed by a right-angled, "Z"-shaped element welded in correspondence with one of the notches 18 for housing the lateral bushes 16.

As can be seen in Figure 8, when each bolt 30 engages the corresponding bush 16 and the upright 22 is in its erect position of use, the tab 58 is captive in the notch 18 of the bush 16 and the upright 22 can neither be raised nor folded down about the pin 54.

It is only possible to fold it down when the corresponding bolt 30 has been lowered, as in Figure 9, after the sector-shaped plate 42 has been rotated and the corresponding bush 16 has left the notch 18 as a result of the folding down of the board.

It is then possible to fold the upright 22 down partially, as in Figure 9, so that the curved plate 56 can then be unhooked from the pin 54.

The upright 22 is refitted onto its pillar 10 by reversal of this operation.

**Claims**

1. A device for sealing the enclosure elements of a commercial vehicle body, the elements being constituted by folding pillars (10), drop boards (14), and any upper removable uprights (22) which extend the pillars (10) upwardly to support the ribs of a tarpaulin, in which each pillar (10) is hollow and incorporates at least one bolt (30) which is movable along the pillar by means of an operating lever (20) and a board (14) adjacent the pillar (10) includes a lateral bush (16) in which an upper end of the bolt (30) can be engaged, and in which the pillar (10) is provided with a rotating locking assembly (34) which includes an eyelet (28) for the passage of a sealing cable (26), the eyelet (28) projecting or being able to project outwardly of the pillar (10), as well as a locking member (42) fast for rotation with the eyelet (28) and adapted to interfere with a lateral abutment (32) of the bolt (30) to prevent the latter from leaving its position of engagement with the bush (16) of the board (14) when the locking assembly (34) is in an angular locking position which corresponds to the passage of the cable (26) through the eyelet (28), whilst the locking member (42) does not interfere with the path of the abutment (32) when the locking assembly (34) is in a different angular position from the previous one, characterised in that the locking assembly (34) is rotatable about an axis (A) which is normal to outer (36) and inner (38) walls of the pillar (10) and includes, within the pillar (10) as a locking member, a substantially circular-sector-shaped plate (42) with a circumferential edge (52) which is adapted to interfere with the lateral abutment (32) of the bolt (30) when the locking assembly (34) is in the locking position.

2. A device according to Claim 1, for a pillar (10) which includes two parallel bolts (30) for the locking of two adjacent boards (14), characterised in that each bolt (30) has a lateral abutment in the form of a finger (32) directed towards the other bolt (30), the axis (A) of rotation of the locking assembly (34) is situated in a position intermediate the two bolts (30), and the sector-shaped plate (42) has a circumferential edge (52) which extends substantially through 180° to carry out the following functions:
  – the locking of both the bolts (30) when the sector-shaped plate (42) is oriented in a central position in which its circumferential edge (52) faces the top of the pillar (10) and interferes with the abutments (32) of both the bolts (30);
  – the alternative locking of one bolt (30) or the other when the sector-shaped plate (42) is oriented at 110° from the central position and its circumferential edge (52) interferes with only one of the abutments (32);
  – the release of both the bolts (30) when the sector-shaped plate (42) is oriented at 180° from its central position and its circumferential edge (52) does not interfere with the abutments (32).

3. A device according to Claim 1 or Claim 2, characterised in that the rotating locking assembly (34) includes a tubular shaft (40) mounted for rotation in a support bush (43) fixed to the outer wall (36) of the pillar (10), the sector-shaped plate (42) is fixed to an end of the tubular shaft (40) which faces the inner wall (38) of the pillar (10), the sector-shaped plate (42) is situated between the inner wall (38) and a corresponding front face of the bush (43), the eyelet (28) is situated on the outside of the outer wall (36) of the pillar (10) and includes a pivot pin (48) which extends transversely through the tubular shaft (40) to enable the eyelet (28) to be brought down against the pillar (10), and a helical compression spring (50) is housed in the tubular shaft (40) and acts at one end against the inner wall (38) and at the other end against the pin (48) of the eyelet (28) to keep the sector-shaped plate (42) against the front face of the bush (43) so as to cause friction in the rotation of the locking assembly (34), and to cause friction in the rotation of the pin (48) of the eyelet (28).

4. A device according to Claim 3, characterised in that the outer wall (36) of the pillar (10) has a recess (46) into which the eyelet (28) can be brought down by the rotation of its pin (48).

5. A device according to any one of the preceding claims, for a pillar (10) which is provided with an upper upright (22) which is hooked by means of a curved plate (56) to a pin (54) situated at the upper end of the pillar (10) and which can be removed after the separation of its lower part from the pillar by rotation about this pin (54), characterised in that the lower part of the upright (22) is provided with at least one lower tab (58) which can be made captive by a corresponding lateral bush (16) of a board (14) or of each board (14), when the bush (16) is held by the corresponding bolt (30), to prevent both the release of the curved plate (56) from the upper pin (54) of the pillar (10) and the rotation of the upright (22) from its position of alignment with the pillar (10).

**Patentansprüche**

1. Vorrichtung zum Absperren der Verschlußelemente eines Nutzfahrzeugaufbaus, wobei die Elemente von klappbaren Stützen (10), abklappbaren Bordwänden (14) sowie nach oben abnehmbaren Ständern (22) gebildet werden, die die Stützen (10) nach oben verlängern, um die Rippen einer Abdeckplane zu halten, wobei jede Stütze (10) hohl ist und zumindest einen Riegel (30) aufnimmt, der längs der Stütze mit Hilfe eines Betätigungshebels (20) bewegbar ist, wobei eine Bordwand (14) neben der Stütze (10) eine seitliche Halterung (16) aufweist, in die ein oberes Ende des Riegels (30) eingreifen kann, und wobei die Stütze (10) mit einem drehbaren Verriegelungsaufbau (34) versehen ist, der eine öse (28) für den Durchlaß eines Absperrseils (26), wobei die öse (28) aus der Stütze (10) vorspringt oder vorspringen kann, sowie einen Verriegelungsteil (42) aufweist, der für eine Drehung mit der öse (28) befestigt und so ausgebildet ist, um ein seitliches Widerlager (32) des Riegels (30) zu blockieren, um zu verhindern, daß der Riegel (30) seine Eingreifstellung mit der Halterung (16) der Bordwand (14) verläßt, wenn der Verriegelungsaufbau (34) in einer verriegelnden Winkelstellung liegt, die dem Durchlaß des Seils (26) durch die öse (28) entspricht, während der Verriegelungsteil (42) die Bahn des Widerlagers (32) nicht blockiert, wenn der Verriegelungsaufbau (34) in einer anderen Winkelstellung als in der oben beschriebenen Winkelstellung liegt, dadurch gekennzeichnet, daß der Verriegelungsaufbau (34) um eine Achse (A) drehbar ist, die senkrecht zur Außenwand (36) und Innenwand (38) der Stütze (10) liegt, und wobei der Verriegelungsaufbau (34) in der Stütze (10) als Verriegelungsteil eine im wesentlichen kreissektorförmige Platte (42) mit einer Umfangskante (52) aufweist, die dazu dient, um das seitliche Widerlager (32) des Riegels (30) zu blockieren, wenn sich der Verriegelungsaufbau (34) in der Verriegelungsstellung befindet.

2. Vorrichtung gemäß Anspruch 1 für eine Stütze (10), die zwei parallele Riegel (30) für das Verriegeln von zwei benachbarten Bordwänden (14) aufweist, dadurch gekennzeichnet, daß jeder Riegel (30) ein seitliches Widerlager in Form eines Fingers (32) besitzt, das zu dem anderen Riegel (30) gerichtet ist, wobei die Achse (A) für die Drehung des Verriegelungsaufbaus (34) an einer Stelle zwischen den beiden Riegeln (30) liegt, und wobei die sektorförmige Platte (42) eine Umfangskante (52) besitzt, die im wesentlichen über 180° verläuft, um folgende Funktionen auszuführen: Verriegeln der beiden Riegel (30), wenn die sektorförmige Platte (42) in einer Mittelstellung liegt, in der ihre Umfangskante (52) zur Oberseite der Stütze (10) gerichtet ist und die Widerlager (32) der beiden Riegel (30) blockiert;
alternatives Verriegeln von einem Riegel (30) oder dem anderen, wenn die sektorförmige Platte (42) unter 110° zur Mittelstellung liegt und ihre Umfangskante (52) nur ein Widerlager (32) blockiert;
Freigeben der beiden Riegel (30), wenn die sektorförmige Platte (42) unter 180° zu ihrer Mittelstellung liegt und ihre Umfangskante (52) die Widerlager (32) nicht blockiert.

3. Vorrichtung gemäß Anspruch 1 oder 2, dadurch gekennzeichnet, daß der drehbare Verriegelungsaufbau (34) weiters eine Rohrwelle (40) aufweist, die drehbar in einer Lagerbuchse (43) befestigt ist, die an der Außenwand (36) der Stütze (10) sitzt, wobei die sektorförmige Platte (42) an einem Ende der Rohrwelle (40) angebracht ist, das der Innenwand (38) der Stütze (10) gegenüberliegt, wobei die sektorförmige Platte (42) zwischen der Innenwand (38) und einer entsprechenden Stirnfläche der Buchse (43) angeordnet ist, wobei die öse (28) an der Außenseite der Außenwand (36) der Stütze (10) angeordnet ist und einen Drehzapfen (48) aufweist, der quer durch die Rohrwelle (40) verläuft, damit die Öse (28) gegen die Stütze (10) gebracht werden kann, und wobei eine Schraubendruckfeder (50) in der Rohrwelle (40) untergebracht ist und an einem Ende auf die Innenwand (38) und am anderen Ende auf den Zapfen (48) der öse (28) wirkt, um die sektorförmige Platte (42) gegen die Stirnfläche der Buchse (40) zu halten, um beim Drehen des Verriegelungsaufbaus (34) Reibung zu erzeugen und beim Drehen des Zapfens (48) der öse (28) Reibung zu erzeugen.

4. Vorrichtung gemäß Anspruch 3, dadurch gekennzeichnet, daß die Außenwand (36) der Stütze (10) eine Ausnehmung (46) besitzt, in die die Öse (28) durch die Drehung ihres Zapfens (48) gebracht werden kann.

5. Vorrichtung gemäß jedem der bisherigen Ansprüche für eine Stütze (10), die mit einem oberen Ständer (22) versehen ist, der mit Hilfe einer gebogenen Platte (56) in einen Zapfen (54) eingehakt wird, der am oberen Ende der Stütze (10) angeordnet ist, und der entfernt werden kann, nachdem sein unterer Teil von der Stütze durch eine Drehung um diesen Zapfen (54) getrennt worde, dadurch gekennzeichnet, daß der untere Teil des Ständers (22) mit zumindest einer unteren Lasche (58) versehen ist, die von einer entsprechenden seitlichen Halterung (16) einer Bordwand (14) oder jeder Bordwand (14) gefangengehalten werden kann, wenn die Halterung (16) vom entsprechenden Riegel (30) gehalten wird, um sowohl die Freigabe der gebogenen Platte (56) vom oberen Zapfen (54) der Stütze (10) als auch die Drehung des Ständers (22) aus seiner Stellung zu verhindern, in der er mit der Stütze (10) ausgerichtet ist.

**Revendications**

1. Dispositif pour sceller les éléments de fermeture d'une carrosserie de véhicule commercial, ces éléments étant constitués par des montants rabattables (10), par des panneaux rabattables (14) et par des colonnes supérieures amovibles (22) qui prolongent les montants (10) vers le haut pour supporter les armatures d'une bâche, dispositif dans lequel chaque montant (10) est creux et comporte au moins un pêne (30) que l'on peut déplacer le long du montant au moyen d'un levier de manoeuvre (20), et dans lequel un panneau (14) adjacent au montant (10) comporte une fourrure latérale (16) dans laquelle l'extrémité supérieure du pêne (30) peut venir en prise, et dans lequel le montant (10) est muni d'un ensemble tournant de verrouillage (34) qui comprend un oeillet (28) pour le passage d'un câble de scellement (26), l'oeillet (28) venant en saillie ou pouvant venir en saillie à l'extérieur du montant (10), ainsi qu'un organe de verrouillage (42) bloqué pour pouvoir tourner avec l'oeillet (28) et conçu pour interférer avec une butée latérale (32) du pêne (30) pour empêcher ce dernier de quitter sa position de prise avec la fourrure (16) du panneau (14) lorsque l'ensemble de verrouillage (34) se trouve dans une position angulaire de verrouillage qui correspond au passage du câble (26) dans l'oeillet (28), tandis que l'organe de verrouillage (42) n'interfère pas avec le chemin de la butée (32) lorsque l'ensemble de verrouillage (34) se trouve dans une position angulaire différente de la précédente, caractérisé en ce que l'ensemble de verrouillage (34) peut tourner autour d'un axe (A) qui est normal à la paroi extérieure (36) et à la paroi intérieure (38) du montant (10) et qui comprend, à l'intérieur du montant (10), comme organe de verrouillage, une plaque (42) substantiellement en forme de secteur circulaire avec un bord circonférentiel (52) qui est conçu pour interférer avec la butée latérale (32) du pêne (30) lorsque l'ensemble de verrouillage (34) se trouve dans la position de verrouillage.

2. Dispositif selon la revendication 1, pour un montant (10) qui comprend deux pênes parallèles (30) pour le verrouillage de deux panneaux adjacents (14), caractérisé en ce que chaque pêne (30) présente une butée latérale sous forme d'un doigt (32) dirigé vers l'autre pêne (30), en ce que l'axe (A) de rotation de l'ensemble de verrouillage (34) est situé dans une position intermédiaire entre les deux pênes (30), et en ce que la plaque (42) en forme de secteur présente un bord circonférentiel (52) qui s'étend sensiblement sur 180° pour assurer les fonctions suivantes:

– le verrouillage des deux deux pênes (30) lorsque la plaque (42) en forme de secteur est orientée dans une position centrale dans laquelle son bord circonférentiel (52) fait face à la partie supérieure du montant (10) et interfère avec les butées (32) des deux pênes (30);

– alternativement, le verrouillage de l'un des pênes (30) ou de l'autre lorsque la plaque (42) en forme de secteur est orientée à 110° par rapport à une position centrale et que son bord circonférentiel (52) interfère uniquement avec l'une des butées (32);

– le déverrouillage des deux pênes (30) lorsque la plaque (42) en forme de secteur est orientée à 180° de sa position centrale et que son bord circonférentiel (52) n'interfère pas avec les butées (32).

3. Dispositif selon la revendication 1 ou 2, caractérisé en ce que l'ensemble tournant de verrouillage (34) comporte un axe tubulaire (40) monté pour pouvoir tourner dans un coussinet support (43) fixé à la paroi extérieure (36) du montant (10), et en ce que la plaque (42) en forme de secteur est fixée à une extrémité de l'axe tubulaire (40) qui fait face à la paroi intérieure (38) du montant (10), en ce que la plaque (42) en forme de secteur est située entre la paroi intérieure (38) et une face avant correspondante du coussinet (43), en ce que l'oeillet (28) est situé sur la face extérieure de la paroi extérieure (36) du montant (10) et comprend un axe de pivotement (48) qui passe transversalement dans l'axe tubulaire (40) pour permettre à l'oeillet (28) d'être rabattu contre le montant (10), et en ce qu'un ressort hélicoïdal de compression (50) est logé dans l'axe tubulaire (40) et agit à l'une de ses extrémités contre la paroi intérieure (38) et à l'autre extrémité contre l'axe (48) de l'oeillet (28) pour maintenir la plaque (42) en forme de secteur contre la face avant du coussinet (40) de façon à créer un frottement dans la rotation de l'ensemble de verrouillage (34) et à créer un frottement dans la rotation de l'axe (48) de l'oeillet (28).

4. Dispositif selon la revendication 3, caractérisé en ce que la paroi extérieure (36) du montant (10) présente une niche (46) dans laquelle l'oeillet (28) peut se rabattre par rotation de son axe (48).

5. Dispositif selon l'une des revendications précédentes, pour un montant (10) équipé d'une colonne supérieure (22) verrouillée, au moyen d'une plaque courbe (56), à un axe (54) situé à l'extrémité supérieure du montant (10) et que l'on peut enlever après séparation de sa partie inférieure d'avec le montant, par rotation autour de son axe (54), caractérisé en ce que la partie inférieure de la colonne (22) présente au moins une oreille inférieure (58) qui peut devenir prisonnière d'une fourrure latérale correspondante (16) d'un panneau (14) ou de chaque panneau (14) lorsque la fourrure (16) est maintenue par le pêne correspondant (30), pour empêcher à la fois le déverrouillage de la plaque courbe (56) d'avec l'axe supérieur (54) du montant (10) et la rotation de la colonne (22) par rapport à sa position d'alignement avec le montant (10).

FIG. 1

EP 0 342 304 B1

FIG. 2

# FIG. 3

FIG. 4

FIG. 8

# FIG. 5

34

52

30

32

28

42

20

# FIG. 6

38

50

A

42

34

30

30

28

44

43

10

36

40

48

46

28

11

FIG. 9

FIG. 7